# EUROPEAN PATENT APPLICATION

(11) **EP 4 280 777 A1**
(43) Date of publication of application: **22.11.2023**
(21) Application number: 22775966.9
(22) Date of filing: 15.03.2022
(51) Int. Cl.: H04W 72/12, H04W 72/14, H04W 28/04, H04L 1/18

(54) **METHOD AND DEVICE FOR COEXISTENCE OF AUTOMATIC TRANSMISSION AND CG RETRANSMISSION**

(30) Priority: 22.03.2021 KR 20210036907
(71) Applicant: Samsung Electronics Co., Ltd., Suwon-si, Gyeonggi-do 16677 (KR)
(72) Inventor: BAEK, Sangkyu, Suwon-si, Gyeonggi-do 16677 (KR); JANG, Jaehyuk, Suwon-si, Gyeonggi-do 16677 (KR)
(74) Representative: HGF
(86) International application number: PCT/KR2022/003597
(87) International publication number: WO 2022/203264

(57) **Abstract**

The present disclosure relates to a communication technique for merging IoT technology with a 5G communication system for supporting a data transmission rate higher than that of a 4G system, and a system therefor. The present disclosure may be applied to intelligence services (for example, smart homes, smart buildings, smart cities, smart cars or connected cars, healthcare, digital education, retail businesses, security and safety related services, etc.) based on a 5G communication technology and an IoT-related technology. The present invention provides a method and a device for performing CG automatic transmission and automatic retransmission.

## Description

### [Technical Field]

The disclosure relates to a method and device for performing autonomous transmission and autonomous retransmission of configured grant (CG).

### [Background Art]

To meet the increased demand for wireless data traffic since the deployment of 4G communication systems, efforts have been made to develop an improved 5G or pre-5G communication system. For this reason, the 5G communication system or the pre-5G communication system is called a beyond 4G network communication system or a post LTE system. To achieve a high data transmission rate, the 5G communication system is considered to be implemented in a very high frequency (mmWave) band (e.g., like 60 GHz band). To relieve a path loss of a radio wave and increase a transfer distance of the radio wave in the very high frequency band, in the 5G communication system, beamforming, massive MIMO, full dimensional MIMO (FD-MIMO), array antenna, analog beam-forming, and large scale antenna technologies have been discussed. Further, to improve a network of the system, in the 5G communication system, technologies such as an evolved small cell, an advanced small cell, a cloud radio access network (cloud RAN), an ultra-dense network, a device to device communication (D2D), a wireless backhaul, a moving network, cooperative communication, coordinated multi-points (CoMP), and reception interference cancellation have been developed. In addition to this, in the 5G system, hybrid FSK and QAM modulation (FQAM) and sliding window superposition coding (SWSC) that are an advanced coding modulation (ACM) scheme and a filter bank multi carrier (FBMC), a non orthogonal multiple access (NOMA), and a sparse code multiple access (SCMA) that are an advanced access technology, and so on have been developed.

Meanwhile, the Internet is evolved from a human-centered connection network through which a human being generates and consumes information to the Internet of Things (IoT) network that transmits/receives information between distributed components such as things and processes the information. The Internet of Everything (IoE) technology in which the big data processing technology, etc., is combined with the IoT technology by connection with a cloud server, etc. has also emerged. To implement the IoT, technology elements, such as a sensing technology, wired and wireless communication and network infrastructure, a service interface technology, and a security technology, have been used. Recently, technologies such as a sensor network, machine to machine (M2M), and machine type communication (MTC) for connecting between things has been researched. In the IoT environment, an intelligent Internet technology (IT) service that creates a new value in human life by collecting and analyzing data generated in the connected things may be provided. The IoT may be applied to fields, such as a smart home, a smart building, a smart city, a smart car or a connected car, a smart grid, health care, smart appliances, and an advanced healthcare service, by fusing and combining the existing information technology (IT) with various industries.

Therefore, various tries to apply the 5G communication system to the IoT network have been conducted. For example, the 5G communication technologies, such as the sensor network, the machine to machine (M2M), and the machine type communication (MTC), have been implemented by techniques such as beamforming, MIMO, and the array antenna. The application of the cloud radio access network (cloud RAN) as the big data processing technology described above may also be considered as an example of the fusing of the 5G communication technology with the IoT technology.

Meanwhile, a configured grant (CG), which is a periodically configured transmission resource, may transmit data for which transmission has not been made for reasons such as priority through an autonomous transmission scheme. In addition, in the case where transmission is not performed due to listen before talk (LBT) failure or collision with other transmissions in an unlicensed band, the CG may transmit corresponding data in an autonomous retransmission scheme.

### [Disclosure of Invention]

### [Technical Problem]

An object of the disclosure is to define an operation method according to each transmission scheme of un-transmitted data in the case where both autonomous transmission and autonomous retransmission schemes are configured.

### [Solution to Problem]

In order to solve the above problems, a method performed by a terminal in a wireless communication system according to an embodiment of the disclosure may comprise identifying that a configured grant (CG) is a de-prioritized uplink grant; identifying whether the de-prioritized uplink grant is configured with an autonomous transmission; and stopping a CG timer running for a corresponding hybrid automatic repeat request (HARQ) process of the de-prioritized uplink grant and a CG retransmission timer running for the corresponding HARQ process, in case that the de-prioritized uplink grant is configured with the autonomous transmission.

In addition, a terminal in a wireless communication system according to an embodiment of the disclosure may comprise a transceiver; and a controller configured to identify that a configured grant (CG) is a de-prioritized uplink grant, identify whether the de-prioritized uplink grant is configured with an autonomous transmission, and stop a CG timer running for a corresponding hybrid automatic repeat request (HARQ) process of the de-prioritized uplink grant and a CG retransmission timer running for the corresponding HARQ process, in case that the de-prioritized uplink grant is configured with the autonomous transmission.

### [Advantageous Effects of Invention]

According to an embodiment of the disclosure, by defining an operation method considering both an autonomous transmission scheme and an autonomous retransmission scheme, there is an effect of implementing different operations without performance degradation.

### [Brief Description of Drawings]

FIG. 1 is a view illustrating a logical channel prioritization scheme according to an embodiment of the disclosure.
FIG. 2 is a view illustrating an autonomous transmission scheme of configured grant according to an embodiment of the disclosure.
FIG. 3 is a view illustrating an autonomous retransmission scheme of configured grant according to an embodiment of the disclosure.
FIG. 4 is a view illustrating an autonomous transmission scheme of a configured grant when both autonomous transmission and autonomous retransmission are configured according to an embodiment of the disclosure.
FIG. 5 is a view illustrating an autonomous transmission scheme of a configured grant when both autonomous transmission and autonomous retransmission are configured according to an embodiment of the disclosure.
FIG. 6 is a view illustrating an autonomous transmission scheme of a configured grant when both autonomous transmission and autonomous retransmission are configured according to an embodiment of the disclosure.
FIG. 7 is a view illustrating an execution condition of autonomous retransmission according to an embodiment of the disclosure.
FIG. 8 is a view illustrating an autonomous transmission scheme of a configured grant when both autonomous transmission and autonomous retransmission are configured according to an embodiment of the disclosure.
FIG. 9 is a view illustrating a structure of a base station according to an embodiment of the disclosure.
FIG. 10 is a view illustrating a structure of a terminal according to an embodiment of the disclosure.

### [Mode for the Invention]

Hereinafter, embodiments of the disclosure are described in detail with reference to the accompanying drawings. In the following description of the disclosure, a detailed description of known functions or constitutions incorporated herein will be omitted when it may make the subject matter of the disclosure rather unclear. The terms which will be described below are terms defined in consideration of the functions in the disclosure, and may be different according to users, intentions of the users, or customs. Therefore, the definitions of the terms should be made based on the contents throughout the specification.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to make the disclosure complete and to inform those skilled in the art of the scope of the disclosure, and the disclosure is defined only by the scope of the appended claims. Throughout the specification, the same or like reference numerals designate the same or like elements.

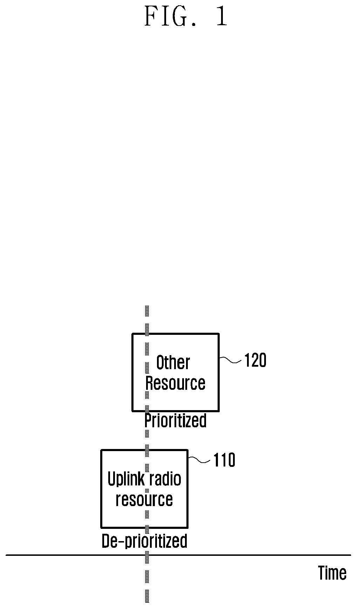

FIG. 1 is a view illustrating a logical channel prioritization scheme according to an embodiment of the disclosure.

In a communication system having a high level of latency and reliability requirements, such as ultra reliable and low latency communications (URLLC), a dedicated radio resource is configured for each service flow, and it is possible to perform transmission optimized for the requirements of each service flow. If each service flow has a dedicated radio resource, in the case where the number of service flows simultaneously used for communication increases, several types of radio resources may be configured at the same time. Therefore, a situation in which several types of radio resources may overlap on the time axis or the time and frequency axes may occur, and in the case of a terminal capable of transmitting up to one uplink radio resource (uplink grant) per a bandwidth part (BWP) at one specific time point, it may need to select and transmit one uplink radio resource. To this end, the priority of each uplink radio resource may be determined.

In the case where a medium access control protocol data unit (MAC PDU) to be transmitted to an uplink radio resource is already generated (in the case where the MAC PDU is stored), the priority of uplink radio resource may be determined on the basis of a logical channel with the highest priority value among data multiplexed in the MAC PDU. If the MAC PDU to be transmitted on the uplink radio resource is not already generated, the highest priority value among the priority of logical channel having available data that can be multiplexed to the MAC PDU to be transmitted on the uplink radio resource may be determined as a priority value of this uplink logical channel. In addition, an uplink radio resource having the highest priority (lowest priority value) overlapping in the time domain (or time and frequency domains) may be transmitted as a prioritized uplink radio resource. Otherwise, other prioritized uplink radio resources in different time domains (or time and frequency domains) or uplink radio resources with prioritized scheduling request transmission are de-prioritized uplink radio resources (de-prioritized uplink grant) and are not transmitted. In the case where resources overlapping in the time domain (or time and frequency domains) have the same priority, transmission of prioritized uplink radio resources or prioritized scheduling requests may be determined by the following rule:
- In the case where a configured grant (CG) and dynamic grant (DG) of the same priority overlap, the dynamic grant is considered as a prioritized uplink radio resource.
- In the case where configured grants of the same priority overlap, one uplink radio resource may be arbitrarily selected as an uplink radio resource in the terminal implementation.
- In the case where an uplink radio resource (uplink grant, i.e., CG or DG) and scheduling request transmission of the same priority overlap, the uplink radio resource is considered as a prioritized uplink radio resource.

In the embodiment of FIG. 1, a situation in which one uplink radio resource 110 overlaps another uplink resource 120 on a time axis is illustrated. In this case, the other uplink resource may be an uplink radio resource (uplink grant) or a scheduling request transmission. In the embodiment of FIG. 1, since the other uplink resource 120 has a higher priority, the uplink radio resource 110 is a de-prioritized uplink resource and is not transmitted. An operation in which only prioritized resource is transmitted according to the priority of uplink resource is called a logical channel (LCH)-based prioritization.

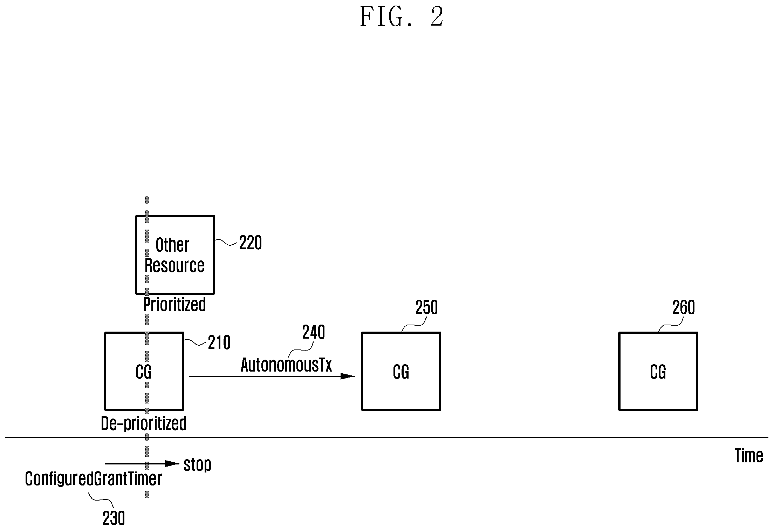

FIG. 2 is a view illustrating an autonomous transmission scheme of configured grant according to an embodiment of the disclosure.

The LCH-based prioritization illustrated in FIG. 1 is an operation in which a terminal selects a prioritized uplink radio resource for uplink resources. For the de-prioritized uplink radio resource, the base station does not know exactly whether there is data to be transmitted by the terminal but it is classified as a de-prioritized resource and is not transmitted, or whether transmission has not been performed because there is no data to be transmitted by the terminal, for example, uplink skipping has been performed. In particular, in the case where the de-prioritized uplink radio resource is a configured grant (CG), which is a periodically configured transmission resource, when the base station allocates the retransmission resource of the configured grant and in the case where is no data to be transmitted by the terminal, this resource becomes a wasted resource that is not transmitted. Regarding this problem, the de-prioritized configured grant uplink radio resource may be transmitted through autonomous transmission.

As in the embodiment of FIG. 2, when a certain configured grant uplink radio resource 210 becomes a de-prioritized uplink radio resource (de-prioritized uplink grant) by another resource 220, and in this case, if a MAC PDU to be transmitted is generated but not transmitted, the transmission of the autonomously stored MAC PDU may be handled by an adjacent resource 250 of the same hybrid automatic repeat request (HARQ) process that can be transmitted within the same configured grant configuration resource. In this case, a previous configured grant resource is a de-prioritized uplink radio resource and must be of a size capable of transmitting the MAC PDU. In some embodiments, conditions for autonomous transmission may be restricted only in the case of a resource having a size consistent with transmission of the MAC PDU.

In the case where the autonomous transmission (autonomous Tx) of configured grant is configured, in the case where this configured grant resource is de-prioritized, the ConfiguredGrantTimer (Configured Grant timer) of the corresponding HARQ process is immediately stopped 230. The ConfiguredGrantTimer is started when the HARQ process for which configured grant is configured is transmitted, and while the ConfiguredGrantTimer is running, a new configured grant transmission of the corresponding HARQ process is not performed. However, since autonomous transmission must be performed quickly, when it is not prioritized for autonomous transmission, the ConfiguredGrantTimer may be stopped to perform autonomous transmission for the next adjacent Configured Grant 250.

The autonomous transmission may be used for the data transmission for URLLC. The autonomous transmission operation may be performed when the terminal transmits HARQ information connected to the initial transmission of configured grant resource to a HARQ device when receiving the uplink resource, and then satisfies autonomous transmission conditions in the subsequent HARQ operation. The autonomous transmission may be configured by the base station to the terminal through a radio resource control (RRC) message. Through autonomous transmission configuration, the base station may predict that the terminal will perform autonomous transmission.

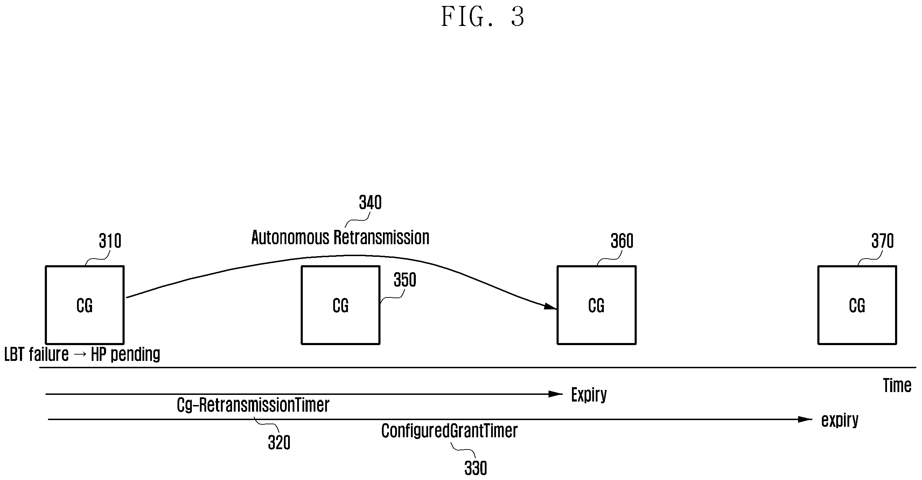

FIG. 3 is a view illustrating an autonomous retransmission scheme of configured grant according to an embodiment of the disclosure.

The autonomous retransmission indicates an operation of retransmitting the generated MAC PDU after a certain time in the case where transmission is impossible due to listen before talk (LBT) failure or collision with other transmissions in an unlicensed band, or the like. The autonomous retransmission uses the initial transmission of configured grant resource, but is classified as retransmission rather than initial transmission, so only stored MAC PDUs are transmitted without toggle of a new data indicator (NDI) of the HARQ process.

The autonomous retransmission may be controlled by a cg-RetransmissionTimer (CGRT). Specifically, when the terminal transmits or retransmits using the initial transmission of configured grant resource 310, CGRT starts 320. In addition, the ConfiguredGrantTimer (CGT) may also be started not to perform the initial transmission of configured grant 330. The length of the CGRT is usually configured shorter than that of the CGT, so that in the case where the CGRT expires, the terminal may perform autonomous retransmission rather than initial transmission using the configured grant resource. The CGRT configuration may enable the terminal to wait for allocation of retransmission resources from the base station during the CGRT period, rather than performing autonomous retransmission. Thereafter, if retransmission of the configured grant resource is not performed even after expiry of the CGRT, the terminal may perform autonomous retransmission 340 on the configured grant resource 360. If the transmission of the configured grant resource that the terminal was trying to transmit suffers from an LBT failure and the LBT failure is notified from a physical layer, the HARQ process of the configured grant becomes a pending HARQ process and may perform autonomous retransmission after the expiration of the CGRT. The pending HARQ process may be classified as a not pending HARQ process when a subsequent transmission that does not suffer an LBT failure is performed, or a configured grant is initialized and the HARQ process is not associated with another active configured grant, or the HARQ buffer of that HARQ process is emptied.

Such autonomous retransmission may be used when LBT operation is performed in an unlicensed band. In some embodiments, autonomous retransmission may be configured separately, and in this case, CGRT configuration may be the configuration of autonomous retransmission. Such autonomous retransmission configuration may be performed by the base station to the terminal through an RRC message. Through autonomous retransmission configuration, the base station may predict that the terminal will perform autonomous retransmission.

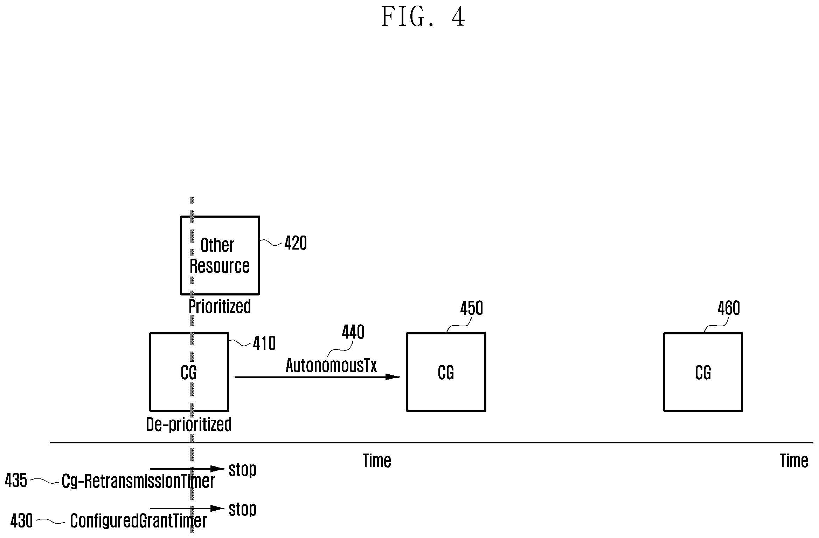

FIG. 4 is a view illustrating an autonomous transmission scheme of a configured grant when both autonomous transmission and autonomous retransmission are configured according to an embodiment of the disclosure.

The autonomous transmission and the autonomous retransmission may complement each other because they are used as transmission schemes of un-transmitted MAC PDUs for different operations. Therefore, in the case where both autonomous transmission and autonomous retransmission (cg-RetransmissionTimer) are configured, transmission of un-transmitted MAC PDU for de-prioritized configured grant is performed through autonomous transmissions, and the transmission of MAC PDU whose transmission is not completed due to LBT failure or collision with other transmissions in an unlicensed band may be performed through autonomous retransmission. In this way, when both autonomous transmission and autonomous retransmission are configured, an operation method considering both transmission schemes needs to be defined and implemented by a device. Accordingly, the two different autonomous transmission and retransmission operations may be performed without degradation of performance.

In the embodiment of FIG. 4, it is assumed that both autonomous transmission and autonomous retransmission (CGRT) of configured grant are configured. In the case where the configured grant 410 is considered as a de-prioritized uplink radio resource (de-prioritized uplink grant) by another resource 420, such as an uplink radio resource that overlaps in different time domains (or time and frequency domains) or a scheduling request (SR) message, the autonomous transmission procedure may be started. To this end, the configured GrantTimer which is running may be stopped 430, and the initial transmission resource of configured grant of the corresponding HARQ process may be used for autonomous transmission. In addition, in the case where the configured grant with which autonomous transmission is configured is de-prioritized, the cg-RetransmissionTimer (CGRT) for autonomous retransmission which is running may also be stopped 435. In this case, the operation of stopping CGRT should be applied only in the case where autonomous transmission is configured. This is because the following problem is occurred: in the case where the autonomous transmission is not configured, the retransmission of configured grant must be performed by separate allocation of retransmission resources by the base station using CS-RNTI, but due to cg-RetransmissonTimer stopping, the allocation timing of retransmission resource by the base station is advanced.

When the CGRT is configured, both ConfiguredGrantTimer and cg-RetransmissionTimer are stopped, and in the case where the HARQ process of this CG is not a pending HARQ process, it is judged as the initial transmission of the configured grant resource, and considering that the NDI bit is toggled, it can be used as an initial transmission resource. Through this, it is possible to perform autonomous transmission of stored MAC PDU in the adjacent configured grant resource 450 that can be used later by an autonomous transmission procedure 440. In some embodiments, when the configured grant for which autonomous transmission is configured is de-prioritized, the corresponding HARQ process is considered as a not pending HARQ process, so that autonomous transmission is subsequently performed and unnecessary autonomous retransmission is not performed. In another embodiment, when the configured grant is de-prioritized regardless of the autonomous transmission configuration, the corresponding HARQ process is considered as a not pending HARQ process, so that autonomous transmission is subsequently performed and unnecessary autonomous retransmission is not performed. Since an operation considering whether it is a pending HARQ process or a not pending HARQ process is applied only in the case where CGRT is configured, the above operation may be operated only in the case where CGRT is configured. However, in another embodiment, an operation considering whether it is a pending HARQ process or a not pending HARQ process may be performed in the case where LCH-based prioritization is configured or without any special conditions.

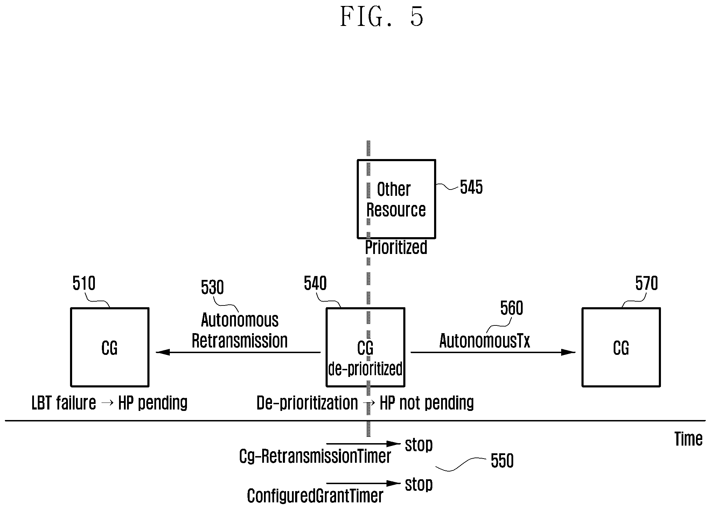

FIG. 5 is a view illustrating an autonomous transmission scheme of a configured grant when both autonomous transmission and autonomous retransmission are configured according to an embodiment of the disclosure.

The autonomous transmission and the autonomous retransmission may complement each other because they are used as transmission schemes of un-transmitted MAC PDU for different operations. Therefore, in the case where both autonomous transmission and autonomous retransmission (cg-RetransmissionTimer) are configured, transmission of un-transmitted MAC PDU for de-prioritized configured grant is performed through autonomous transmissions, and the transmission of MAC PDU whose transmission is not completed due to LBT failure or collision with other transmissions in an unlicensed band may be performed through autonomous retransmission. In this way, when both autonomous transmission and autonomous retransmission are configured, an operation method considering both transmission schemes needs to be defined and implemented. Accordingly, the two different autonomous transmission and retransmission operations may be performed without degradation of performance.

In the embodiment of FIG. 5, it is assumed that both autonomous transmission and autonomous retransmission (CGRT) of configured grant are configured. In this case, if the transmission of the configured grant 510 is not actually made due to LBT failure, the HARQ process becomes a pending process, and then autonomous retransmission may be performed 530 when selecting this HARQ process from the configured grant resource 540. In this way, in the case where the autonomous retransmission is started using the configured grant resource, both the ConfiguredGrantTimer and cg-RetransmissionTimer of the corresponding HARQ process may be started.

However, in the embodiment of FIG. 5, it is assumed that the configured grant resource 540 on which autonomous retransmission is performed is de-prioritized by another uplink resource 545 immediately after transmission starts, and thus transmission is suspended. In this case, the configured grant resource 540 becomes a de-prioritized uplink radio resource (de-prioritized uplink grant), and then, the corresponding HARQ process may become a not pending HARQ process for autonomous transmission. Also, the ConfiguredGrantTimer and the cg-RetransmissionTimer, which have already started and running, may be stopped (550).

Thereafter, the de-prioritized configured grant may perform autonomous transmission in the next transmittable configured grant resource 570. The HARQ process of the de-prioritized configured grant may be considered as a not pending process so that it may be transmitted in a subsequent configured grant resource. In addition, in the case where autonomous transmission is configured, when the configured grant is de-prioritized, it is necessary to stop the cg-RetransmissionTimer which is running to advance the timing of autonomous transmission and perform fast autonomous transmission.

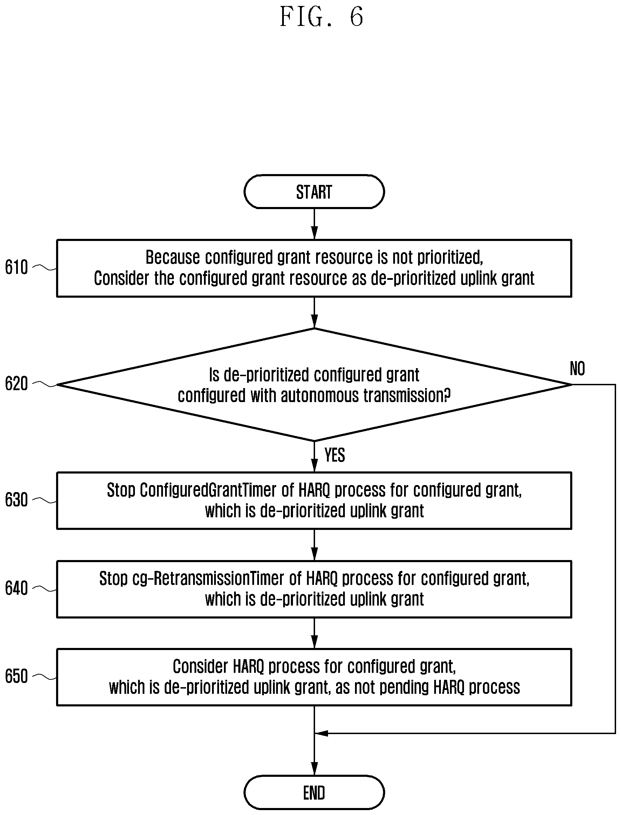

FIG. 6 is a view illustrating an autonomous transmission scheme of a configured grant when both autonomous transmission and autonomous retransmission are configured according to an embodiment of the disclosure.

The autonomous transmission and the autonomous retransmission may complement each other because they are used as transmission schemes of un-transmitted MAC PDU for different operations. Therefore, in the case where both autonomous transmission and autonomous retransmission (cg-RetransmissionTimer) are configured, transmission of un-transmitted MAC PDU for de-prioritized configured grant is performed through autonomous transmissions, and the transmission of MAC PDU whose transmission is not completed due to LBT failure or collision with other transmissions in an unlicensed band may be performed through autonomous retransmission. In this way, when both autonomous transmission and autonomous retransmission are configured, an operation method considering both transmission schemes needs to be defined and implemented by a device. Accordingly, the two different autonomous transmission and retransmission operations may be performed without degradation of performance.

In the embodiment of FIG. 6, it is assumed that the configured grant resource is de-prioritized due to other resources, cancellation indication from the base station, or the like and thus considers the configured grant resource as a de-prioritized uplink radio resource (de-prioritized uplink grant) 610. In this case, if the configured grant is configured with the autonomous transmission 620, the operation of the HARQ process for autonomous retransmission needs to be performed. Therefore, if the autonomous transmission is configured for the de-prioritized configured grant, the ConfiguredGrantTimer of the HARQ process for the configured grant, which is a de-prioritized uplink radio resource, is stopped 630, so that the autonomous transmission may be performed using the adjacent configured grant resource. In addition, by stopping the cg-RetransmissionTimer of the HARQ process for the configured grant, which is a de-prioritized uplink radio resource 640, an operation that disables the autonomous transmission due to the operation of the cg-RetransmissionTimer may be prevented. In addition, by considering the HARQ process for the configured grant, which is a de-prioritized uplink radio resource, as a not pending HARQ process 650, the HARQ process may perform the autonomous transmission procedure.

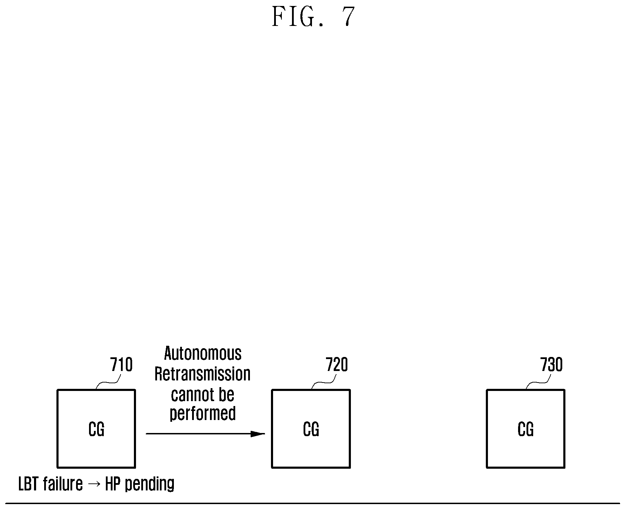

FIG. 7 is a view illustrating an execution condition of autonomous retransmission according to an embodiment of the disclosure.

The autonomous retransmission is a method for retransmitting stored MAC PDU in an adjacent configured grant resource after the expiry of cg-RetransmissionTimerthe when the base station cannot allocate retransmission resource due to LBT failure or radio resource collision in an unlicensed band during uplink transmission using the configured grant. This autonomous retransmission is available for the configured grant using the same HARQ process. However, if the size of the MAC PDU stored in the HARQ buffer to perform autonomous retransmission is different from the size that may be transmitted in the adjacent configured grant, the autonomous retransmission of this MAC PDU cannot be performed. As the case where the size of configured grant using the same HARQ process is different, there may be a case where the resource size change by reactivation of configured grant or configuration of the configured grant with different resource sizes (CG Configuration) shares the HARQ process, or the like.

In the embodiment of FIG. 7, it is assumed that the configured grant 710 that has performed the initial transmission is not transmitted due to LBT failure. In addition to this case, there may be a case where transmission is not performed due to collision with other transmissions in a radio channel even though the transmission is performed. In the case where the LBT failure is received from a physical layer, which is a lower layer, this HARQ process may be a pending HARQ process. However, since the size of the configured grant 720 to be used later differs from the size of a previous configured grant 710, a situation in which the stored MAC PDU cannot be transmitted may be occurred. As a result, even if the autonomous retransmission condition is satisfied thereafter, autonomous retransmission cannot occur. Therefore, if the stored MAC PDU does not match the resource size of configured grant, the autonomous retransmission procedure should not be started.

In other words, in the case where cg-RetransmissionTimer is configured but not operated (the autonomous retransmission may be performed in the case where the autonomous retransmission condition is satisfied), ConfiguredGrantTimer is not operating and the HARQ process is not operating, or if the size of available uplink radio resource (configured grant) does not match the size of stored MAC PDU, a new data indicator (NDI) bit is considered to be toggled, so that the corresponding configured grant and related HARQ information may be transmitted to a HARQ device. This may be an operation to start the stage for initial transmission rather than autonomous retransmission. In the case where the above condition is not satisfied, if the uplink radio resource previously transmitted through the same HARQ process was the configured grant, the NDI bit is considered not toggled and the corresponding configured grant and related HARQ information may be transmitted to the HARQ device. This may be the operation to start the autonomous retransmission stage.

In the embodiment of FIG. 7, the matter that the size of available uplink radio resource matches the size of stored MAC PDU may be:
- The size of uplink radio resource and the size of stored MAC PDU match
- The size of uplink radio resource is greater than or equal to the size of stored MAC PDU
   interpreted as one of the above cases.

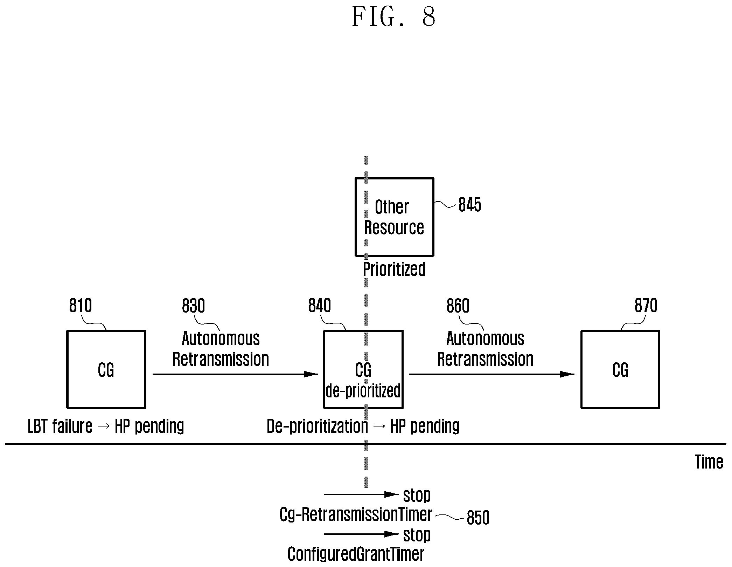

FIG. 8 is a view illustrating an autonomous transmission scheme of a configured grant when both autonomous transmission and autonomous retransmission are configured according to an embodiment of the disclosure.

The autonomous transmission and the autonomous retransmission may complement each other because they are used as transmission schemes of un-transmitted MAC PDU for different operations. Therefore, in the case where both autonomous transmission and autonomous retransmission (cg-RetransmissionTimer) are configured, transmission of un-transmitted MAC PDU for de-prioritized configured grant is performed through autonomous transmissions, and the transmission of MAC PDU whose transmission is not completed due to LBT failure or collision with other transmissions in an unlicensed band may be performed through autonomous retransmission. In this way, when both autonomous transmission and autonomous retransmission are configured, an operation method considering both transmission schemes needs to be defined and implemented by a device. Accordingly, the two different autonomous transmission and retransmission operations may be performed without degradation of performance.

In the embodiment of FIG. 8, in the case of uplink transmission in which autonomous retransmission is being performed, even if the uplink radio resource for prioritizing autonomous retransmission is de-prioritized, and thus, becomes the de-prioritized uplink radio resource (de-prioritized uplink grant), the autonomous retransmission is continuously performed. This means that in the case where at least one autonomous retransmission condition is satisfied, the autonomous retransmission is performed without being changed to the autonomous transmission. To this end, in the case where the retransmission condition of configured grant is already satisfied, the HARQ process may be considered as a pending HARQ process when this resource becomes a de-prioritized uplink radio resource.

In the embodiment of FIG. 8, it is assumed that both autonomous transmission and autonomous retransmission (CGRT) of configured grant are configured. In this case, if the transmission of configured grant 810 is not actually made due to the failure of the LBT, the HARQ process becomes a pending process so that when selecting this HARQ process in the configured grant resource 840, the autonomous retransmission 830 may be performed. In this way, in the case where the autonomous retransmission is started using the configured grant resource, both the ConfiguredGrantTimer and cg-RetransmissionTimer of the corresponding HARQ process may be started.

However, in the embodiment of FIG. 8, it is assumed that the configured grant resource 840 in which autonomous retransmission is performed is de-prioritized by another uplink resource 845 immediately after transmission starts, and thus transmission is stopped. In this case, the configured grant resource 840 becomes a de-prioritized uplink radio resource (de-prioritized uplink grant), but since it has already started the autonomous retransmission procedure before, the corresponding HARQ process may be a pending HARQ process. Also, the ConfiguredGrantTimer and the cg-RetransmissionTimer, which have already started and are in operation, may be stopped 850.

Thereafter, the de-prioritized configured grant may perform autonomous retransmission 860 in the next transmittable configured grant resource 870. The HARQ process of the de-prioritized configured grant, which is being autonomously retransmitted, may be considered as a not pending process and may be transmitted in a subsequent configured grant resource. In addition, in the case where the autonomous retransmission is configured, stopping the cg-RetransmissionTimer in operation when the configured grant is de-prioritized is necessary to advance the timing of autonomous retransmission and perform fast autonomous retransmission. Here, the configured grant resource under autonomous retransmission may mean a resource used for transmission that is a configured grant resource but is classified as a retransmission resource rather than an initial transmission.

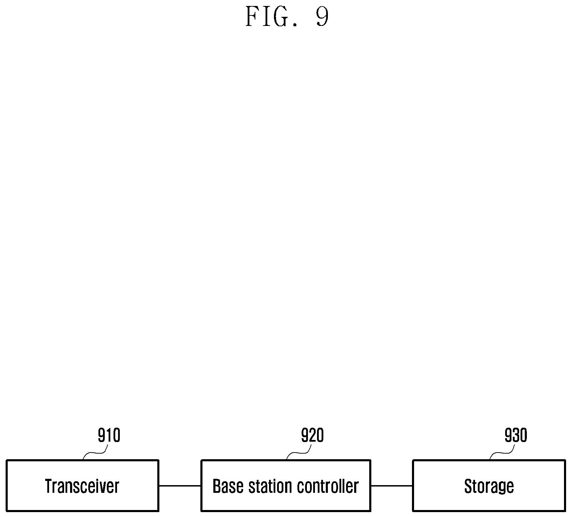

FIG. 9 is a view illustrating a structure of a base station according to an embodiment of the disclosure.

With reference to FIG. 9, the base station may include a transceiver 910, a controller 920, and a storage 930. In the disclosure, the controller 920 may be defined as a circuit or an application-specific integrated circuit or at least one processor. The transceiver 910 may transmit and receive signals to or from another network entity. The transceiver 910 may transmit, to a terminal, system information, a synchronization signal, or a reference signal, for example. The controller 920 may control an overall operation of the base station according to an embodiment proposed in the disclosure. For example, the controller 920 may control a signal flow between each block to perform the operation according to the above-described flowchart. The storage 930 may store at least one of information transmitted and receive through the transceiver 910 and information generated through the controller 920.

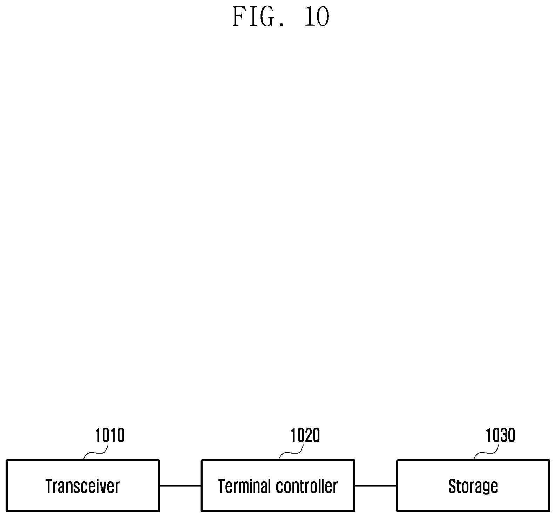

FIG. 10 is a view illustrating a structure of a terminal according to an embodiment of the disclosure.

With reference to FIG. 10, the terminal may include a transceiver 1010, a controller 1020, and a storage 1030. In the disclosure, the controller may be defined as a circuit or an application-specific integrated circuit or at least one processor. The transceiver 1010 may transmit and receive signals to or from a different network entity. The transceiver 1010 may receive system information, a synchronization signal, or a reference signal from the base station, for example. The controller 1020 may control an overall operation of the terminal according to an embodiment proposed in the disclosure. For example, the controller 1020 may control a signal flow between each block to perform the operation according to the above-described flowchart. The storage 1030 may store at least one of information transmitted and receive through the transceiver 1010 and information generated through the controller 1020.

In the above-described detail embodiments of the disclosure, components included in the disclosure have been expressed as a singular or plural form according to the proposed detailed embodiments. However, such singular or plural representations are selected appropriately according to situations presented for the convenience of description, and the disclosure is not limited to the singular or plural form. Even expressed in a plural form, a component may be construed as a singular form, or even expressed in a singular form, a component may be construed as a plural form.

While the disclosure has been shown and described with reference to various embodiments thereof, it will be apparent that various changes in form may be made therein without departing from the scope of the disclosure Therefore, the scope of the disclosure should not be limited to the described embodiments and should be defined by the appended claims and their equivalents.

## Claims

1. A method performed by a terminal in a wireless communication system, the method comprising:
identifying that a configured grant (CG) is a de-prioritized uplink grant;
identifying whether the de-prioritized uplink grant is configured with an autonomous transmission; and
stopping a CG timer running for a corresponding hybrid automatic repeat request (HARQ) process of the de-prioritized uplink grant and a CG retransmission timer running for the corresponding HARQ process, in case that the de-prioritized uplink grant is configured with the autonomous transmission.

2. The method of claim 1, wherein the identifying that the CG is the de-prioritized uplink grant comprises:
identifying whether a dynamic grant having a higher priority than a priority of the CG, another CG having a higher priority than the priority of the CG, or a resource for a scheduling request (SR) transmission having a higher priority than the priority of the CG overlaps with a transmission of the CG.

3. The method of claim 1, further comprising:
configuring a state of the corresponding HARQ process of the CG to not pending, in case that the CG is identified as the de-prioritized uplink grant.

4. The method of claim 3, further comprising:
performing the autonomous transmission for the de-prioritized uplink grant.

5. The method of claim 4, wherein the autonomous transmission is performed in a next transmission resource of the de-prioritized uplink grant.

6. The method of claim 1, further comprising:
receiving, from a base station, first information for configuring the autonomous transmission, second information on the CG timer, and third information on the CG retransmission timer.

7. The method of claim 1, further comprising:
receiving information for configuring logical channel-based prioritization.

8. A terminal in a wireless communication system, the terminal comprising:
a transceiver; and
a controller configured to:
identify that a configured grant (CG) is a de-prioritized uplink grant,
identify whether the de-prioritized uplink grant is configured with an autonomous transmission, and
stop a CG timer running for a corresponding hybrid automatic repeat request (HARQ) process of the de-prioritized uplink grant and a CG retransmission timer running for the corresponding HARQ process, in case that the de-prioritized uplink grant is configured with the autonomous transmission.

9. The terminal of claim 8, wherein the controller is further configured to identify the CG as the de-prioritized uplink grant, in case that a dynamic grant having a higher priority than a priority of the CG, another CG having a higher priority than the priority of the CG, or a resource for a scheduling request (SR) transmission having a higher priority than the priority of the CG overlaps with a transmission of the CG.

10. The terminal of claim 8,
wherein the controller is further configured to configure a state of the corresponding HARQ process of the CG to not pending, in case that the CG is identified as the de-prioritized uplink grant.

11. The terminal of claim 10,
wherein the controller is further configured to perform the autonomous transmission for the de-prioritized uplink grant.

12. The terminal of claim 11,
wherein the autonomous transmission is performed in a next transmission resource of the de-prioritized uplink grant.

13. The terminal of claim 8,
wherein the controller is further configured to control the transceiver to receive, from a base station, first information for configuring the autonomous transmission, second information on the CG timer, and third information on the CG retransmission timer.

14. The terminal of claim 8,
wherein the controller is further configured to control the transceiver to receive information for configuring logical channel-based prioritization.
